(19) Europäisches Patentamt
European Patent Office
Office européen des brevets

(11) **EP 4 589 041 A1**

(12) **EUROPEAN PATENT APPLICATION**
published in accordance with Art. 153(4) EPC

(43) Date of publication:
**23.07.2025 Bulletin 2025/30**

(21) Application number: **23865498.2**

(22) Date of filing: **11.09.2023**

(51) International Patent Classification (IPC):
*C22C 38/00* (2006.01)        *B22F 1/00* (2022.01)
*B22F 10/28* (2021.01)        *B33Y 10/00* (2015.01)
*B33Y 70/00* (2020.01)        *C21D 9/00* (2006.01)
*C22C 38/46* (2006.01)

(52) Cooperative Patent Classification (CPC):
**B22F 1/00; B22F 10/28; B33Y 10/00; B33Y 70/00;
C21D 9/00; C22C 38/00; C22C 38/46;** Y02P 10/25

(86) International application number:
**PCT/JP2023/033100**

(87) International publication number:
**WO 2024/058145 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.09.2022 JP 2022144664**

(71) Applicant: **Sanyo Special Steel Co., Ltd.
Himeji-shi, Hyogo 672-8677 (JP)**

(72) Inventors:
• **HAGIYA, Toru
  Himeji-shi, Hyogo 672-8677 (JP)**
• **SAWADA, Toshiyuki
  Himeji-shi, Hyogo 672-8677 (JP)**
• **TSUJII, Yuka
  Himeji-shi, Hyogo 672-8677 (JP)**

(74) Representative: **Potter Clarkson
Chapel Quarter
Mount Street
Nottingham NG1 6HQ (GB)**

(54) **IRON-BASED ALLOY POWDER AND METHOD FOR PRODUCING MOLDED BODY**

(57)     There is provided an Fe-based alloy powder that can suppress cracks of a shaped article. The Fe-based alloy powder contains, in terms of mass%: $0.30 \leq C \leq 0.50$; $0 < Si \leq 0.40$; $0 < Mn \leq 0.40$; $0.85 \leq Cr \leq 1.75$; $0 < Ni \leq 0.40$; $0.70 \leq Mo \leq 1.20$; $0 < V \leq 0.60$; $0 < Al \leq 0.10$; and $0 \leq W \leq 0.40\%$, the balance consisting of Fe and unavoidable impurities. Ceq, which is a carbon equivalent determined by converting an influence of elements other than carbon contained in the Fe-based alloy powder into a carbon amount, is 0.95% or less.

**EP 4 589 041 A1**

**Description**

TECHNICAL FIELD

The present invention relates to an Fe-based alloy powder used for producing a shaped article, and a method for producing the shaped article using the Fe-based alloy powder.

BACKGROUND ART

Various Fe-based alloy powders for producing shaped articles by additive manufacturing or the like and shaped articles obtained by using the Fe-based alloy powders have been proposed.

Patent Literature 1 (JP7108014B) discloses an Fe-based alloy powder containing, in terms of mass%, $0.40 < C < 0.70$; $Si < 0.60$; $Mn < 0.90$; $Cr < 4.00$; $Ni < 2.00$; $0.90 < Mo < 1.20$; $W < 2.00$; $V < 0.60$; and $0.01 \leq Al < 0.10$, with the balance consisting of Fe and unavoidable impurities, wherein the Fe-based alloy powder has an average particle size $D_{50}$ of 200 μm or less, and describes that an index K1 of quenching and tempering hardness is more than 21.7, and that an index K2 of heat conductivity is more than 29.0. By producing a shaped article by using this Fe-based alloy powder, heat conductivity and hardness of the shaped article have been increased.

Patent Literature 2 (JP2022-092524A) discloses a shaped article produced from an Fe-based alloy powder, wherein an index T1 of heat conductivity is more than 32.0, wherein an index T2 of softening resistance is more than 50.0, and wherein an average size PC of a carbide contained in the shaped article is less than 3.0 [μm]. In this manner, the shaped article has both high heat conductivity and high hardness.

Patent Literature 3 (JP2021-181591A) discloses a metal powder containing, in terms of mass%, $0.1 \leq C \leq 0.4$; $0.005 \leq Si \leq 1.5$; $0.3 \leq Mn \leq 8.0$; $2.0 \leq Cr \leq 15.0$; $2.0 \leq Ni \leq 10.0$; $0.1 \leq Mo \leq 3.0$; $0.1 \leq V \leq 2.0$; $0.010 \leq N \leq 0.200$; and $0.01 \leq Al \leq 4.0$, with the balance consisting of Fe and unavoidable impurities, and describes that a variable A ($A = 15C + Mn + 0.5Cr + Ni$) correlated with the Ms point satisfies a relation of "$10 < A < 20$". In this manner, when an additively manufactured article is produced from the metal powder, an additively manufactured article having fewer cracks and warpages and having moderate hardness and high heat conductivity is obtained.

CITATION LIST

PATENT LITERATURE

Patent Literature 1: JP7108014B
Patent Literature 2: JP2022-092524A
Patent Literature 3: JP2021-181591A

SUMMARY OF INVENTION

In Patent Literatures 1 and 2, heat conductivity and hardness of the shaped article are high, but no attention is paid to cracks of the shaped article. On the other hand, in Patent Literature 3, an additively manufactured article having fewer cracks and warpages is obtained if "$10 < A < 20$" is satisfied. However, in Comparative Example 5 described in Patent Literature 3, cracks have not occurred although "$10 < A < 20$" is not satisfied and, therefore, the variable A is not appropriate as a parameter evaluating cracks of the shaped article.

In an Fe-based alloy powder having predetermined chemical components, the present inventors focused on a carbon equivalent Ceq described later and, as a result, found that cracks of shaped articles can be suppressed by using an Fe-based alloy powder such that this parameter satisfies a predetermined condition, thereby completing the present invention.

The present disclosure provides the following aspects.

[Aspect 1]

An Fe-based alloy powder comprising, in terms of mass%:

$$0.30 \leq C \leq 0.50$$

$$0 < Si \leq 0.40$$

$$0 < Mn \leq 0.40$$

$$0.85 \leq Cr \leq 1.75$$

$$0 < Ni \leq 0.40$$

$$0.70 \leq Mo \leq 1.20$$

$$0 < V \leq 0.60$$

$$0 < Al \leq 0.10$$

$$0 \leq W \leq 0.40\%$$

and the balance consisting of Fe and unavoidable impurities,
wherein Ceq, which is a carbon equivalent determined by converting an influence of elements other than carbon comprised in the Fe-based alloy powder into a carbon amount, is 0.95 mass% or less.

[Aspect 2]

The Fe-based alloy powder according to aspect 1, wherein the Fe-based alloy powder has a Ms point of 340 to 385°C.

[Aspect 3]

The Fe-based alloy powder according to aspect 1 or 2, wherein the Fe-based alloy powder comprises more than 0% and 0.40 mass% or less of W.

[Aspect 4]

The Fe-based alloy powder according to any one of aspects 1 to 3, wherein an index K1 expressed by the following expression:

[Expression 1]

$$K1 = 9.2 \times C + 3.7 \times Si + 18.1 \times Mo + 0.8 \times W$$

is 17.00 mass% or more, and wherein an index K2 expressed by the following expression:

--> K2 = 70.2 - 22.1 × C - 1.6 × Si - 5.4 × Mn - 5.8 × Cr - 5.2 × Ni -5.3 × Mo - 1.0 × W - 2.5 × V - 0.3 × Al
[Expression 2]

is 44.00 mass% or more.

[Aspect 5]

A method for producing a shaped article, comprising irradiating the Fe-based alloy powder according to any one of aspects 1 to 4 with an energy beam to melt and solidify the Fe-based alloy powder, thereby producing a shaped article.
By producing a shaped article by using an Fe-based alloy powder which is the present invention, cracks of the shaped article can be suppressed.

DESCRIPTION OF EMBODIMENTS

(Method for Producing Shaped Article)

The Fe-based alloy powder which is the present embodiment is used for producing a shaped article. In production of a shaped article, an Fe-based alloy powder is provided, and then the Fe-based alloy powder is melted and solidified, whereby a shaped article that has not been heat-treated is obtained. As a treatment process for melting and solidifying the Fe-based alloy powder, there is a rapid melting and rapid cooling and solidification process. Specific examples of this process include a three-dimensional additive manufacturing method, a thermal spraying method, a laser coating method, and a weld overlaying method. In particular, the three-dimensional additive manufacturing method based on a powder bed system can be preferably used.

In the three-dimensional additive manufacturing method based on the powder bed system, a 3D printer is used. In the method, spread Fe-based alloy powder is irradiated with an energy beam such as a laser beam and an electron beam, whereby the Fe-based alloy powder is rapidly heated to be melted. Thereafter, the Fe-based alloy powder is rapidly solidified. This melting and solidification bonds particles of the Fe-based alloy powder. The irradiation of the energy beam is selectively applied to a portion of the Fe-based alloy powder. Portions of the Fe-based alloy powder that have not been irradiated with the energy beam are not melted, and a bonding layer is formed only in the portion irradiated with the energy beam.

The Fe-based alloy powder is spread over this bonding layer and then the powder is irradiated with the energy beam to occur the melting and solidification described above to form a new bonding layer. Repeating such a treatment gradually grows an aggregate of the bonding layers, whereby a shaped article having a desired three-dimensional shape can be produced. By using the three-dimensional additive manufacturing method, shaped articles having complicated shapes can be produced easily.

(Fe-based Alloy Powder)

The Fe-based alloy powder contains C, Si, Mn, Cr, Ni, Mo, V, and Al, and the balance consists of Fe and unavoidable impurities. Here, the contents (mass%) of respective C, Si, Mn, Cr, Ni, Mo, V, and Al satisfy conditions shown in the following expressions (1) to (8). In the following expressions (2), (3), (5), (7), and (8), the lower limit value is not specified since each element is an essential element contained in the Fe-based alloy powder, but it should be understood that the content of each element is more than 0 mass%.

$$0.30 \leq C \leq 0.50 \ldots (1)$$

$$Si \leq 0.40 \ldots (2)$$

$$Mn \leq 0.40 \ldots (3)$$

$$0.85 \leq Cr \leq 1.75 \ldots (4)$$

$$Ni \leq 0.40 \ldots (5)$$

$$0.70 \leq Mo \leq 1.20 \ldots (6)$$

$$V \leq 0.60 \ldots (7)$$

$$Al \leq 0.10 \ldots (8)$$

The Fe-based alloy powder may contain W. That is, W is an optional element. The content of W may be 0.40 mass% or less.

In the Fe-based alloy powder, the carbon equivalent Ceq satisfies the condition shown in the following expression (9). The Ms point preferably satisfies the condition shown in the following expression (10).

$$Ceq \leq 0.95 \ldots (9)$$

$$340 \leq Ms \leq 385 \ldots (10)$$

The carbon equivalent Ceq is a value (mass%) determined by converting an influence of elements other than carbon contained in the Fe-based alloy powder into a carbon amount and is expressed by the following expression (11). The Ms point is a temperature at which martensite starts forming (that is, a temperature at which steel starts hardening) (°C) during cooling for quenching, and is expressed by the following expression (12). The Ms point can be experimentally determined by Formastor test. However, as the Ms point in the present embodiment, a value obtained by substituting the content of each element in the following expression (12) is used, instead of a value obtained in an experiment.

[Expression 3]

$$Ceq = C + \frac{Si}{24} + \frac{Mn}{6} + \frac{Cr}{5} + \frac{Ni}{40} + \frac{(Mo + W/2)}{4} + \frac{V}{14} \quad \cdots \quad (11)$$

$$Ms = 550 - 361 * C - 39 * Mn - 35 * V - 17 * Ni - 20 * Cr$$

$$- 5 * (Mo + W) + 15 * Co + 30 * Al \quad \cdots \quad (12)$$

In the above expression (11), C, Si, Mn, Cr, Ni, Mo, W, and V are the contents (mass%) of the respective elements of the Fe-based alloy powder. In the above expression (12), C, Mn, V, Ni, Cr, Mo, W, Co, and Al are the contents (mass%) of the respective elements of the Fe-based alloy powder. The Fe-based alloy powder which is the present invention does not contain Co and, therefore, the content of Co in the above expression (12) is 0 mass%.

If the carbon equivalent Ceq is 0.95 mass% or less as shown in the above expression (9), the hardness of the shaped article just after shaping can be prevented from becoming excessively high to ensure toughness of the shaped article during shaping. If the hardness of the shaped article is too high, cracks of the shaped article occur during shaping and, therefore, by ensuring toughness of the shaped article, occurrence of cracks of the shaped article can be suppressed. The carbon equivalent Ceq is preferably 0.91 mass% or less. The lower limit value of the carbon equivalent Ceq is not particularly limited, but is typically 0.75 mass% or more, and more typically 0.80 mass% or more.

If the Ms point is 340°C or more as shown in the above expression (10), the amount of remaining austenite contained in the shaped article can be reduced. If the Ms point is lower than 340°C, remaining austenite is likely to occur and, therefore, cracks due to internal stress increased by gradual transformation of the remaining austenite into martensite (that is, season cracks) are likely to occur. The Ms point is preferably 345°C or more.

In addition, if the Ms point is 385°C or less as shown in the above expression (10), thermal stress during shaping can be relaxed to suppress cracks of the shaped article, while ensuring an appropriate amount of remaining austenite. As described above, if remaining austenite is excessively present, season cracks are likely to occur, but if remaining austenite is present in an appropriate amount, the highly ductile remaining austenite can relax thermal stress during shaping to suppress cracks of the shaped article. The Ms point is preferably 370°C or less, and more preferably 360°C or less.

(Content of C)

C is an essential element which forms a solid solution to reinforce a matrix and which furthermore forms a carbide to promote a precipitation effect. While die steel of the conventional forging method has a problem of facilitating micro segregation due to an increased carbon amount, a finer carbide can be obtained by rapid cooling in shaping processing and, therefore, more carbon can be contained, compared with forged materials, to enhance hardness of the shaped article.

If the content of C is 0.30 mass% or more, sufficient quenching and tempering hardness can be obtained. On the other hand, if the content of C is more than 0.50 mass%, micro segregation is promoted to deteriorate toughness, and the amount of solid solution carbon is increased to deteriorate heat conductivity of the shaped article. Therefore, the content of C is 0.30 mass% or more and 0.50 mass% or less, and preferably 0.35 mass% or more and 0.45 mass% or less.

(Content of Si)

Si is an essential element which forms a solid solution in a matrix to enhance hardness. Also, Si has an effect of enhancing softening resistance. If the content of Si is more than 0.40 mass%, Si dissolves into the matrix without forming a carbide, thereby significantly deteriorating heat conductivity of the shaped article. Therefore, the content of Si is 0.40 mass% or less, and preferably 0.35 mass% or less. The lower limit value of the content of Si is not particularly limited as long as the lower limit value is more than 0 mass%, but is preferably 0.05 mass% or more, and more preferably 0.10 mass% or more.

(Content of Mn)

Mn is an essential element which enhances hardenability to suppress deterioration of toughness due to formation of bainite. Also, Mn has an effect of enhancing softening resistance. If the content of Mn is more than 0.40 mass%, Mn forms a solid solution in a matrix to deteriorate heat conductivity of the shaped article. Therefore, the content of Mn is 0.40 mass% or less, and preferably 0.35 mass% or less. The lower limit value of the content of Mn is not particularly limited as long as the lower limit value is more than 0 mass%, but is preferably 0.15 mass% or more, and more preferably 0.20 mass% or more.

(Content of Cr)

Cr is an essential element which enhances hardenability to suppress deterioration of toughness due to formation of bainite. Also, Cr has an effect of enhancing softening resistance. If the content of Cr is less than 0.85 mass%, the Ms point is too high, and if the content of Cr is more than 1.75 mass%, the Ms point is too low. Therefore, in order for the Ms point to fall within an appropriate temperature range, the content of Cr is 0.85 mass% or more and 1.75 mass% or less, preferably 0.90 mass% or more and 1.50 mass% or less, and more preferably 0.90 mass% or more and 1.20 mass% or less.

(Content of Ni)

Ni is an essential element which enhances hardenability to suppress deterioration of toughness due to formation of bainite. Also, Ni dissolves into a matrix without forming a carbide, thereby deteriorating heat conductivity of the shaped article. If the content of Ni is more than 0.40 mass%, heat conductivity of the shaped article is significantly deteriorated. Therefore, the content of Ni is 0.40 mass% or less, and preferably 0.30 mass% or less. The lower limit value of the content of Ni is not particularly limited as long as the lower limit value is more than 0 mass%, but is preferably 0.10 mass% or more, and more preferably 0.20 mass% or more.

(Content of Mo)

Mo is an essential element which promotes secondary hardening during tempering to enhance quenching and tempering hardness. Addition of Mo contributes little to deterioration of heat conductivity of the shaped article, and has a significant effect of enhancing hardness of the shaped article. Therefore, the content of Mo is 0.70 mass% or more. On the other hand, if the content of Mo is more than 1.20 mass%, the amount of Mo remaining in a matrix is likely to increase to deteriorate heat conductivity of the shaped article. Therefore, the content of Mo is 1.20 mass% or less. That is, the content of Mo is 0.70 mass% or more and 1.20 mass% or less, and preferably 0.75 mass% or more and 1.00 mass% or less.

(Content of V)

V is an essential element which promotes secondary hardening during tempering to enhance quenching and tempering hardness. If the content of V is more than 0.60 mass%, the amount of V remaining in a matrix increases to deteriorate heat conductivity of the shaped article. Therefore, the content of V is 0.60 mass% or less, and preferably 0.50 mass% or less. The lower limit value of the content of V is not particularly limited as long as the lower limit value is more than 0 mass%, but is preferably 0.20 mass% or more, and more preferably 0.30 mass% or more.

(Content of Al)

Al is an essential element which forms a nitride to suppress coarsening of a grain during quenching. If the content of Al is more than 0.10 mass%, excessive Al nitride is likely to be formed to deteriorate toughness of the shaped article. Therefore, the content of Al is 0.10 mass% or less, and preferably 0.06 mass% or less. The lower limit value of the content of Al is not particularly limited as long as the lower limit value is more than 0 mass%, but is preferably 0.01 mass% or more, and more preferably 0.02 mass% or more.

(Content of W)

W is an optional element which promotes secondary hardening during tempering to enhance quenching and tempering hardness. If the content of W is more than 0.40 mass%, the amount of W remaining in a matrix increases to deteriorate heat conductivity of the shaped article. Therefore, the content of W is 0.40 mass% or less, and preferably 0.30 mass% or less. The lower limit value of the content of W is 0 mass%, but where W is contained, the lower limit value is preferably 0.10 mass% or more, and more preferably 0.20 mass% or more.

(Index K1)

The index K1 is an index (mass%) evaluating quenching and tempering hardness, and is expressed by the following expression (13).
[Expression 4]

$$K1 = 9.2 * C + 3.7 * Si + 18.1 * Mo + 0.8 * W \quad \cdots \quad (13)$$

C, Si, Mo, and W shown in the above expression (13) show the contents (mass%) of the respective elements in the Fe-based alloy powder. By measuring the contents of the respective elements, the index K1 can be determined. The higher the index K1 is, the higher the tempering hardness is. In order to enhance the index K1, addition of an element such as C, Si, Mo, and W is effective, and addition of C and Mo is particularly effective. By adjusting the respective contents of C, Si, Mo, and W so that the index K1 is 17.00 mass% or more, the quenching and tempering hardness of the shaped article produced by using this Fe-based alloy powder can be 42.0 HRC or more. As described later, in order to ensure the lifetime of the shaped article, the quenching and tempering hardness is preferably 42.0 HRC or more. Preferably, the index K1 is 18.0 mass% or more. The upper limit value of the index K1 is not particularly limited, but is typically 25.0 mass% or less, and more typically 21.0 mass% or less.

(Index K2)

The index K2 is an index (mass%) evaluating heat conductivity, and is expressed by the following expression (14).
[Expression 5]

$$K2 = 70.2 - 22.1 * C - 1.6 * Si - 5.4 * Mn - 5.8 * Cr - 5.2 * Ni$$
$$-5.3 * Mo - 1.0 * W - 2.5 * V - 0.3 * Al \quad \cdots \quad (14)$$

C, Si, Mn, Cr, Ni, Mo, W, V and Al shown in the above expression (14) show the contents (mass%) of the respective elements in the Fe-based alloy powder. By measuring the contents of the respective elements, the index K2 can be determined. If the index K2 is less than 44.00 mass%, the amount of alloy elements remaining in a matrix increases, whereby heat conductivity is likely to be deteriorated. Therefore, the index K2 is preferably 44.00 mass% or more. Preferably, the index K2 is 46.0 mass% or more. The upper limit value of the index K2 is not particularly limited, but is typically 50.0 mass% or less, and more typically 48.0 mass% or less.

(Average Particle Size $D_{50}$)

When producing the shaped article, in order for the Fe-based alloy powder to be spread easily, flowability of the Fe-based alloy powder is required. Considering this point, the average particle size $D_{50}$ of the Fe-based alloy powder is preferably 45 $\mu$m or less. On the other hand, if the particle size of the Fe-based alloy powder is too small, the Fe-based alloy powder is hard to handle and, therefore, the average particle size $D_{50}$ of the Fe-based alloy powder is preferably 20 $\mu$m or more.

The average particle size $D_{50}$ is a particle size at a point where the cumulative volume of the powder is 50% in a cumulative distribution under an assumption that the total volume of the Fe-based alloy powder is 100% (also referred to as median diameter). The particle size of the Fe-based alloy powder can be measured by using a laser diffraction scattering method or the like, and as an apparatus suitable for measurement of the average particle size $D_{50}$, there is a laser diffraction scattering particle size distribution measuring apparatus "Microtrac MT3000" manufactured by NIKKISO CO., LTD. The Fe-based alloy powder and pure water are poured into the cell of this measurement apparatus, and the particle size of the Fe-based alloy powder can be measured based on the information on light scattering of the Fe-based alloy powder.

(Heat Conductivity of Shaped Article)

Where the shaped article produced from the Fe-based alloy powder is used as a hot-working die for hot stamping or die casting, in order to enhance cooling efficiency of the shaped article, the heat conductivity (room temperature) of the shaped article after tempering is preferably 40.0 W/m·K or more. The heat conductivity (room temperature) is more preferably 42.0 W/m·K or more.

(Hardness of Shaped Article)

Where the shaped article produced from the Fe-based alloy powder is used as a hot-working die for hot stamping or die casting, in order to obtain a sufficient lifetime, the hardness of the shaped article after quenching and tempering is preferably 42.0 HRC or more. This hardness can be measured in accordance with the Rockwell hardness test stipulated in JIS Z2245.

EXAMPLES

Examples 1 to 12 and Comparative Examples 1 to 7

In each Example, a raw material having chemical components shown in Table 1 was used. An Fe-based alloy powder was produced from each raw material by using a gas atomizing method. Table 1 shows, in addition to the chemical component, the indexes K1 and K2, the carbon equivalent Ceq, the Ms point, and the average particle size $D_{50}$. In Table 1 below, the values that do not satisfy the conditions shown in the above expressions (1) to (10) are underlined.

[Table 1]

| | | C [mass%] | Si [mass%] | Mn [mass%] | Cr [mass%] | Ni [mass%] | Mo [mass%] | W [mass%] | V [mass%] | Al [mass%] | K1 [mass%] | K2 [mass%] | Ceq [mass%] | Ms [°C] | D$_{50}$ [μm] |
|---|---|---|---|---|---|---|---|---|---|---|---|---|---|---|---|
| Example | 1 | 0.41 | 0.05 | 0.05 | 1.39 | 0.02 | 0.75 | 0.02 | 0.56 | 0.09 | 17.55 | 47.20 | 0.93 | 351.2 | 33 |
| | 2 | 0.41 | 0.13 | 0.25 | 1.02 | 0.28 | 0.83 | 0.00 | 0.35 | 0.01 | 19.28 | 46.93 | 0.90 | 351.0 | 35 |
| | 3 | 0.47 | 0.12 | 0.01 | 0.87 | 0.03 | 0.87 | 0.03 | 0.03 | 0.04 | 20.54 | 49.64 | 0.87 | 357.7 | 42 |
| | 4 | 0.40 | 0.13 | 0.28 | 0.98 | 0.21 | 1.12 | 0.01 | 0.08 | 0.00 | 24.44 | 46.72 | 0.94 | 363.1 | 31 |
| | 5 | 0.36 | 0.33 | 0.26 | 1.34 | 0.28 | 0.91 | 0.02 | 0.15 | 0.01 | 21.02 | 45.86 | 0.93 | 368.7 | 28 |
| | 6 | 0.32 | 0.09 | 0.37 | 1.10 | 0.24 | 0.77 | 0.39 | 0.33 | 0.01 | 17.53 | 48.06 | 0.88 | 376.9 | 44 |
| | 7 | 0.44 | 0.19 | 0.12 | 1.18 | 0.21 | 0.71 | 0.21 | 0.29 | 0.02 | 17.77 | 46.88 | 0.93 | 345.2 | 43 |
| | 8 | 0.35 | 0.32 | 0.09 | 1.35 | 0.14 | 0.73 | 0.05 | 0.58 | 0.02 | 17.66 | 47.53 | 0.88 | 367.2 | 43 |
| | 9 | 0.32 | 0.31 | 0.15 | 1.71 | 0.18 | 0.74 | 0.02 | 0.39 | 0.01 | 17.50 | 46.05 | 0.92 | 374.2 | 27 |
| | 10 | 0.42 | 0.16 | 0.31 | 0.99 | 0.04 | 0.95 | 0.02 | 0.15 | 0.01 | 21.67 | 47.61 | 0.93 | 356.0 | 37 |
| | 11 | 0.35 | 0.34 | 0.23 | 1.07 | 0.12 | 0.72 | 0.01 | 0.11 | 0.02 | 17.52 | 49.74 | 0.81 | 384.3 | 26 |
| | 12 | 0.37 | 0.34 | 0.08 | 1.19 | 0.16 | 0.98 | 0.01 | 0.59 | 0.02 | 22.41 | 46.63 | 0.93 | 361.8 | 42 |
| Comparative Example | 1 | 0.39 | 0.05 | 0.05 | 0.71 | 0.02 | 0.75 | 0.02 | 0.07 | 0.09 | 17.36 | 52.81 | 0.74 | 389.1 | 31 |
| | 2 | 0.34 | 0.06 | 0.12 | 1.89 | 0.05 | 0.95 | 0.21 | 0.55 | 0.01 | 20.71 | 44.10 | 1.04 | 359.2 | 33 |
| | 3 | 0.39 | 0.11 | 0.02 | 0.86 | 0.04 | 0.55 | 0.03 | 0.03 | 0.03 | 13.97 | 53.07 | 0.71 | 387.5 | 40 |
| | 4 | 0.48 | 0.29 | 0.05 | 1.10 | 0.11 | 1.24 | 0.10 | 0.06 | 0.04 | 28.01 | 45.07 | 1.05 | 343.3 | 35 |
| | 5 | 0.21 | 0.12 | 0.28 | 1.36 | 0.27 | 0.74 | 0.04 | 0.17 | 0.03 | 15.80 | 50.17 | 0.74 | 422.5 | 31 |
| | 6 | 0.57 | 0.11 | 0.24 | 1.21 | 0.17 | 0.75 | 0.32 | 0.27 | 0.03 | 19.48 | 43.25 | 1.11 | 293.9 | 28 |
| | 7 | 0.47 | 0.13 | 0.11 | 070 | 0.12 | 0.96 | 0.02 | 0.31 | 0.02 | 22.20 | 48.44 | 0.90 | 344.9 | 44 |

EP 4 589 041 A1

In production of the Fe-based alloy powder, in vacuum, each raw material was subjected to heating (high-frequency induction heating) in a crucible made of alumina to provide a melted alloy, and then the melted alloy was dropped from a nozzle having a diameter of 5 mm disposed on the bottom of the crucible. A high-pressure argon gas was sprayed onto this melted alloy to pulverize and rapidly cool the melted alloy to provide a large amount of fine powder. The resulting powder was sieved to obtain an Fe-based alloy powder having a particle size of 63 $\mu$m or less.

By using a three-dimensional additive manufacturing apparatus (EOS-M280; manufactured by EOS (Electro Optical Systems) GmbH), a shaped article (test piece) which was a rectangular parallelepiped of 15 mm length $\times$ 100 mm width $\times$ 15 mm height was produced from the Fe-based alloy powder obtained in each Example. As a laser irradiation condition during shaping, a standard parameter of the apparatus (MS1, thickness of a layer to be added: 40 $\mu$m) was used.

(Tempering)

Each shaped article was subjected to tempering. Specifically, a treatment in which each shaped article was held at 600°C for 60 minutes and then was subjected to air-cooling was repeated twice. In the three-dimensional additive manufacturing method, the article is quenched by rapid cooling during shaping and, therefore, each shaped article was subjected only to tempering and was not subjected to quenching.

(Measurement of Tempering Hardness)

By using a Rockwell hardness tester, the hardness (HRC) of the surface perpendicular to the direction of addition in the shaped article subjected to above-described tempering was measured. The measurement results are shown in Table 2. In Table 2, the values of the tempering hardness lower than 42.0 HRC are underlined.

(Measurement of Heat Conductivity)

The shaped article subjected to tempering was finished into a disc shape having a diameter of 10 mm and a thickness of 1 mm, and then the heat conductivity of each shaped article was measured by using a laser flash method. The measurement results are shown in Table 2. In Table 2, the value of the heat conductivity lower than 40.0 W/m·K is underlined.

(Crack Determination)

Each shaped article (a rectangular parallelepiped of 15 mm length $\times$ 100 mm width $\times$ 15 mm height) was visually confirmed to determine whether or not a crack was present. Specifically, where a crack had occurred on at least one surface of the shaped article (rectangular parallelepiped), the shaped article was determined to have a crack, and where no crack had occurred on any surface of the shaped article (rectangular parallelepiped), the shaped article was determined to have no crack. The determination results are shown in Table 2. In the crack determination shown in Table 2 below, "○" means that the shaped article has no crack, and "×" means that the shaped article has a crack.

[Table 2]

| | | Cr [mass%] | K1 [mass%] | K2 [mass%] | Ceq [mass%] | Ms [°C] | Tempering hardness [HRC] | Heat conductivity [W/mK] | Crack determination |
|---|---|---|---|---|---|---|---|---|---|
| Example | 1 | 1.39 | 17.55 | 47.20 | 0.93 | 351.2 | 42.1 | 43.9 | ○ |
| | 2 | 1.02 | 19.28 | 46.93 | 0.90 | 351.0 | 44.7 | 44.2 | ○ |
| | 3 | 0.87 | 20.54 | 49.64 | 0.87 | 357.7 | 47.1 | 46.7 | ○ |
| | 4 | 0.98 | 24.44 | 46.72 | 0.94 | 363.1 | 51.9 | 44.0 | ○ |
| | 5 | 1.34 | 21.02 | 45.86 | 0.93 | 368.7 | 47.3 | 43.2 | ○ |
| | 6 | 1.10 | 17.53 | 48.06 | 0.88 | 376.9 | 42.9 | 44.9 | ○ |
| | 7 | 1.18 | 17.77 | 46.88 | 0.93 | 345.2 | 43.1 | 44.2 | ○ |
| | 8 | 1.35 | 17.66 | 47.53 | 0.88 | 367.2 | 43.0 | 45.1 | ○ |
| | 9 | 1.71 | 17.50 | 46.05 | 0.92 | 374.2 | 42.5 | 43.4 | ○ |
| | 10 | 0.99 | 21.67 | 47.61 | 0.93 | 356.0 | 47.9 | 45.0 | ○ |
| | 11 | 1.07 | 17.52 | 49.74 | 0.81 | 384.3 | 42.8 | 46.5 | ○ |
| | 12 | 1.19 | 22.41 | 46.63 | 0.93 | 361.8 | 49.6 | 43.7 | ○ |
| Comparative Example | 1 | <u>0.71</u> | 17.36 | 52.81 | 0.74 | <u>389.1</u> | 42.6 | 49.6 | × |
| | 2 | <u>1.89</u> | 20.71 | 44.10 | <u>1.04</u> | 359.2 | 47.0 | 41.5 | × |
| | 3 | 0.86 | <u>13.97</u> | 53.07 | 0.71 | <u>387.5</u> | <u>37.4</u> | 49.7 | × |
| | 4 | 1.10 | 28.01 | 45.07 | <u>1.05</u> | 343.3 | 57.5 | 41.8 | × |
| | 5 | 1.36 | <u>15.80</u> | 50.17 | 0.74 | <u>422.5</u> | <u>39.7</u> | 47.7 | × |
| | 6 | 1.21 | 19.48 | <u>43.25</u> | 1.11 | <u>293.9</u> | 45.6 | <u>39.1</u> | × |
| | 7 | <u>070</u> | 22.20 | 48.44 | 0.90 | 344.9 | 48.7 | 45.8 | × |

In Examples 1 to 12, the contents of the respective elements contained in the Fe-based alloy powder fall within the value ranges shown in the above expressions (1) to (8), and with regard to the Fe-based alloy powder containing W (Examples 1 and 3 to 12), the content of W is 0.40 mass% or less. Also, in Examples 1 to 12, the carbon equivalent Ceq satisfies the condition shown in the above expression (9). In this manner, in the shaped articles produced from the Fe-based alloy powders of Examples 1 to 12, occurrence of cracks was able to be suppressed. In Examples 1 to 12, the Ms point satisfies the condition shown in the above expression (10) as well.

For the tempering hardness of the shaped article, 42.0 HRC or more could be ensured, and for the heat conductivity of the shaped article, 40.0 W/m·K or more could be ensured. If the tempering hardness of the shaped article is 42.0 HRC or more, the lifetime of the shaped article can be enhanced more easily. Also, if the heat conductivity of the shaped article is 40.0 W/m·K or more, the cooling efficiency of the shaped article can be enhanced more easily.

In Comparative Examples 2, 4, and 6, the carbon equivalent Ceq did not satisfy the condition shown in the above expression (9), and in Comparative Examples 1, 3, 5, and 6, the Ms point did not satisfy the condition shown in the above expression (10). Also, in Comparative Example 7, the content of Cr did not satisfy the condition shown in the above expression (4). In addition, in the shaped articles produced from the Fe-based alloy powders which were Comparative Examples 1 to 7, respectively, cracks occurred. On the other hand, in Comparative Examples 3 and 5, the tempering hardness of the shaped article was lower than 42.0 HRC, resulting in failure in ensuring a sufficient hardness. In Comparative Example 6, the heat conductivity of the shaped article was lower than 40.0 W/m·K, resulting in failure in ensuring a sufficient heat conductivity.

**Claims**

1. An Fe-based alloy powder comprising, in terms of mass%:

$$0.30 \leq C \leq 0.50$$

$$0 < \text{Si} \leq 0.40$$

$$0 < \text{Mn} \leq 0.40$$

$$0.85 \leq \text{Cr} \leq 1.75$$

$$0 < \text{Ni} \leq 0.40$$

$$0.70 \leq \text{Mo} \leq 1.20$$

$$0 < \text{V} \leq 0.60$$

$$0 < \text{Al} \leq 0.10$$

$$0 \leq \text{W} \leq 0.40\%$$

and the balance consisting of Fe and unavoidable impurities,
wherein Ceq, which is a carbon equivalent determined by converting an influence of elements other than carbon comprised in the Fe-based alloy powder into a carbon amount, is 0.95 mass% or less.

2.  The Fe-based alloy powder according to claim 1, wherein the Fe-based alloy powder has a Ms point of 340 to 385°C.

3.  The Fe-based alloy powder according to claim 1, wherein the Fe-based alloy powder comprises more than 0% and 0.40 mass% or less of W.

4.  The Fe-based alloy powder according to any one of claims 1 to 3, wherein an index K1 expressed by the following expression:

    [Expression 1]

$$K1 = 9.2 \times C + 3.7 \times Si + 18.1 \times Mo + 0.8 \times W$$

    is 17.00 mass% or more, and wherein an index K2 expressed by the following expression:

    --> K2 = 70.2 - 22.1 × C - 1.6 × Si - 5.4 × Mn - 5.8 × Cr - 5.2 × Ni -5.3 × Mo - 1.0 × W - 2.5 × V - 0.3 × Al          [Expression 2]

    is 44.00 mass% or more.

5.  A method for producing a shaped article, comprising irradiating the Fe-based alloy powder according to any one of claims 1 to 3 with an energy beam to melt and solidify the Fe-based alloy powder, thereby producing a shaped article.

## INTERNATIONAL SEARCH REPORT

| | International application No. |
|---|---|
| | **PCT/JP2023/033100** |

| A. CLASSIFICATION OF SUBJECT MATTER |
|---|
| **C22C 38/00**(2006.01)i; **B22F 1/00**(2022.01)i; **B22F 10/28**(2021.01)i; **B33Y 10/00**(2015.01)i; **B33Y 70/00**(2020.01)i; **C21D 9/00**(2006.01)i; **C22C 38/46**(2006.01)i <br> FI: C22C38/00 304; B22F1/00 U; B22F10/28; B33Y10/00; B33Y70/00; C21D9/00 M; C22C38/00 301Z; C22C38/46 |
| According to International Patent Classification (IPC) or to both national classification and IPC |

| B. FIELDS SEARCHED |
|---|
| Minimum documentation searched (classification system followed by classification symbols) <br> C22C38/00; B22F1/00; B22F10/28; B33Y10/00; B33Y70/00; C21D9/00; C22C38/46 |
| Documentation searched other than minimum documentation to the extent that such documents are included in the fields searched <br><br> Published examined utility model applications of Japan 1922-1996 <br> Published unexamined utility model applications of Japan 1971-2023 <br> Registered utility model specifications of Japan 1996-2023 <br> Published registered utility model applications of Japan 1994-2023 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| A | WO 2022/124359 A1 (SANYO SPECIAL STEEL CO LTD) 16 June 2022 (2022-06-16) <br> paragraph [0001], table 1A | 1-5 |
| A | WO 2019/220917 A1 (HITACHI METALS, LTD.) 21 November 2019 (2019-11-21) <br> paragraph [0001], table 1 | 1-5 |
| A | JP 2019-85633 A (SANYO SPECIAL STEEL CO LTD) 06 June 2019 (2019-06-06) <br> table 1 | 1-5 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 November 2023** | **28 November 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/033100**

| Patent document cited in search report | | | Publication date (day/month/year) | Patent family member(s) | | | Publication date (day/month/year) |
|---|---|---|---|---|---|---|---|
| WO | 2022/124359 | A1 | 16 June 2022 | EP | 4261302 | A1 | |
| | | | | paragraph [0001], table 1A | | | |
| | | | | JP | 2022-92524 | A | |
| | | | | TW | 202231890 | A | |
| WO | 2019/220917 | A1 | 21 November 2019 | US | 2021/0040591 | A1 | |
| | | | | paragraph [0001], table 1 | | | |
| | | | | EP | 3795707 | A1 | |
| | | | | CN | 111954725 | A | |
| JP | 2019-85633 | A | 06 June 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7108014 B
- JP 2022092524 A
- JP 2021181591 A